# EUROPEAN PATENT APPLICATION

(11) **EP 4 514 063 A1**
(43) Date of publication of application: **26.02.2025**
(21) Application number: 22938559.6
(22) Date of filing: 22.04.2022
(51) Int. Cl.: H04W 88/02

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN)
(74) Representative: Hoffmann Eitle
(86) International application number: PCT/JP2022/018572
(87) International publication number: WO 2023/203760

(57) **Abstract**

A terminal according to one aspect of the present disclosure includes a receiving section that receives a configuration indicating whether scheduling of a physical downlink shared channel (PDSCH) follows a specific transmission configuration indication (TCI) state that is applied to a plurality of types of signals, including downlink and uplink, and downlink, and a control section that determines a quasi co-location (QCL) assumption for a demodulation reference signal (DMRS) port of the PDSCH based on the configuration. One aspect according to the present disclosure makes it possible to appropriately determine QCL assumptions.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (e.g., NR), it is being considered that user terminals (terminals, user terminals, User Equipment (UE)) will control transmission and reception processing based on information regarding quasi-co-location (QCL) (QCL assumptions/Transmission Configuration Indication (TCI) state/spatial relation).

In addition, studies are being conducted on indicating TCI states applicable to a plurality of types of signals (channels/reference signals) using downlink control information. However, the relationship between the timing of the indication and the QCL assumptions/TCI states applied to a signal is unclear. In a case in which such a relation is not clear, it may result in a deterioration in communication quality and a decrease in throughput.

Therefore, one of the objectives according to the present disclosure is to provide a terminal, a radio communication method, and a base station that appropriately determine QCL assumptions. Solution to Problem

A terminal according to one aspect of the present disclosure includes a receiving section that receives a configuration indicating whether scheduling of a physical downlink shared channel (PDSCH) follows a specific transmission configuration indication (TCI) state that is applied to a plurality of types of signals, including downlink and uplink, and downlink, and a control section that determines a quasi co-location (QCL) assumption for a demodulation reference signal (DMRS) port of the PDSCH based on the configuration.

### Advantageous Effects of Invention

One aspect according to the present disclosure makes it possible to appropriately determine QCL assumptions.

### Brief Description of Drawings

[FIG. 1] FIGS. 1A and 1B show an example of a unified/common TCI framework.
[FIG. 2] FIGS. 2A and 2B show an example of a DCI-based TCI state indication.
[FIG. 3] FIG. 3 shows an example of application times for the unified TCI state indication.
[FIG. 4] FIG. 4 shows an example of a default QCL assumption for PDSCH.
[FIG. 5] FIGS. 5A and 5B show an example of the operation of Embodiment #2-2-2.
[FIG. 6] FIG. 6 is a diagram showing an example of a schematic configuration of a radio communication system according to an embodiment.
[FIG. 7] FIG. 7 is a diagram illustrating an example of a configuration of a base station according to an embodiment.
[FIG. 8] FIG. 8 is a diagram illustrating an example of a configuration of a user terminal according to an embodiment.
[FIG. 9] FIG. 9 is a diagram illustrating an example of a hardware configuration of a base station and a user terminal according to an embodiment.
[FIG. 10] FIG. 10 is a diagram illustrating an example of a vehicle according to an embodiment.

### Description of Embodiments

### (Search Space Set)

In NR, a UE is configured with one or more search space (SS) sets. A SS set is a set of PDCCH candidates that the UE monitors. The SS set is also called a PDCCH search space set, a search space, and the like.

The UE monitors PDCCH candidates in one or more SS sets. The one or more SS sets may include at least one of an SS set common to one or more UEs (a common search space (CSS) set) and a SS set specific to a UE (a UE-specific search space (USS) set).

The CSS set may include, for example, at least one of the following:
- Type 0-PDCCH CSS set
- Type OA-PDCCH CSS set
- Type 1-PDCCH CSS set
- Type 2-PDCCH CSS set
- Type 3-PDCCH CSS set

A Type 0-PDCCH CSS set may represent a set of CSSs used to monitor DCI formats that are Cyclic Redundancy Check (CRC) scrambled with a System Information-Radio Network Temporary Identifier (SI-RNTI) in a given cell (e.g., a primary cell). In the present disclosure, a Type 0-PDCCH CSS set may be referred to as a Type 0 CSS/CSS set.

The Type 0-PDCCH CSS set may be configured in the UE based on information (e.g., the Radio Resource Control (RRC) parameter "pdcch-ConfigSIB1") in a Master Information Block (MIB) transmitted on a broadcast channel (Physical Broadcast Channel (PBCH)).

Alternatively, the Type 0-PDCCH CSS set may be configured based on information in information about the cell-specific PDCCH (cell-specific PDCCH information, e.g., the RRC parameter "PDCCH-ConfigCommon") (e.g., the RRC parameters "searchSpaceSIB1" or "searchSpaceZero") .

The cell-specific PDCCH information may be notified to the UE via system information (e.g., System Information Block (SIB) 1) or UE-specific RRC signalling (e.g., synchronization configuration information in an RRC reconfiguration message (e.g., the RRC parameter "ReconfigurationWithSync")).

The Type OA-PDCCH CSS set may represent a set of CSSs used to monitor DCI formats that are CRC scrambled with SI-RNTI in a specified cell (e.g., a primary cell). The Type OA-PDCCH CSS set may be configured based on information in the cell-specific PDCCH information (e.g., the RRC parameter "searchSpaceOtherSystemInformation"). In the present disclosure, the Type OA-PDCCH CSS set may be referred to as a Type 0A CSS/CSS set.

The Type 1-PDCCH CSS set may represent a set of CSSs used to monitor DCI formats that are CRC scrambled with Random Access (RA)-RNTI or TC-RNTI in a given cell (e.g., a primary cell). The Type 1-PDCCH CSS set may be configured based on information in the cell-specific PDCCH information (e.g., the RRC parameter "ra-SearchSpace"). In the present disclosure, a Type 1-PDCCH CSS set may be referred to as a Type 1 CSS/CSS set.

The Type 2-PDCCH CSS set may represent a set of CSSs used to monitor DCI formats that are CRC scrambled with Paging (P)-RNTI in a given cell (e.g., a primary cell). The Type 2-PDCCH CSS set may be configured based on information in the cell-specific PDCCH information (e.g., the RRC parameter "pagingSearchSpace"). In the present disclosure, a Type 2-PDCCH CSS set may be referred to as a Type 2 CSS/CSS set.

A Type 3-PDCCH CSS set may represent a set of CSSs used to monitor at least one of the DCI formats that are CRC scrambled with the Slot Format Indicator (SFI)-RNTI, INT-RNTI, TPC-PUSCH-RNTI, TPC-PUCCH-RNTI, and TPC-SRS-RNTI. The Type 3-PDCCH CSS set may be configured based on information in UE-specific PDCCH information (UE-specific PDCCH information, e.g., the RRC parameter "PDCCH-Config") (e.g., the RRC parameter "SearchSpace"). The UE-specific PDCCH information may be notified to the UE by UE-specific RRC signalling (e.g., an RRC reconfiguration message). In the present disclosure, a Type 3-PDCCH CSS set may be referred to as a Type 3 CSS/CSS set.

The USS set may represent a set of USSs used to monitor DCI formats that are CRC scrambled by C-RNTI or CS-RNTI. The USS set may be configured based on information in the UE-specific PDCCH information (e.g., the RRC parameter "SearchSpace").

Each of the above SS sets is associated with a Control Resource Set (CORESET). The CORESET may include a plurality of types (e.g., CORESET#0, a CORESET common to one or more UEs (cell-specific) (common CORESET), and a UE-specific CORESET (individual

### CORESET)).

CORESET#0 may be configured based on information (e.g., the RRC parameter "ControlResourceSetzero") in the MIB or the cell-specific PDCCH information (e.g., the RRC parameter "PDCCH-ConfigCommon"). CORESET#0 may be associated with either a CSS set or a USS set.

The common CORESET may be configured based on information (e.g., the RRC parameter "commonControlResourceSet") in the cell-specific PDCCH information (e.g., the RRC parameter "PDCCH-ConfigCommon"). A common CORESET may be associated with either a CSS set or a USS set.

The UE-specific CORESET may be configured based on information (e.g., the RRC parameter "ControlResourceSet") in the UE-specific PDCCH information (e.g., the RRC parameter "PDCCH-Config"). The CORESET may be associated with either a CSS set or a USS set. The maximum number of such CORESETs that can be configured per bandwidth part (BWP) in a cell may be specified in the specifications.

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Unified/common TCI Framework)

With a unified TCI framework, a plurality of types of (UL and DL) channels can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam / unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, a number N (≥ 1) of TCI states (UL TCI states) applied to UL channels/RS and a number M (≥ 1) of TCI states (DL TCI states) applied to DL channels/RS may be specified. At least one of N and M may be notified/configured/indicated to the UE via higher layer signalling/physical layer signalling.

In the present disclosure, when N=M=X (X is any integer) is described, this may mean that a TCI state (joint TCI state) common to X number of ULs and DLs (corresponding to X number of TRPs) is notified/configured/indicated to the UE. In addition, when N=X (X is any integer) and M=Y (Y is any integer, or Y may be X), this may mean that X number of UL TCI states (corresponding to X number of TRPs) and Y number of DL TCI states (i.e., separate TCI states) (corresponding to Y number of TRPs) are notified/configured/indicated to the UE, respectively.

For example, when N=M=1 is described, it may mean that a TCI state common to one UL and DL for a single TRP is notified/configured/indicated to the UE (joint TCI state for a single TRP).

In addition, for example, when N = 1 and M = 1 is described, it may mean that one UL TCI state and one DL TCI state for a single TRP are separately notified/configured/indicated to the UE (separate TCI states for a single TRP).

Moreover, for example, when N=M=2 is described, it may mean that a TCI state common to a plurality of (two) ULs and DLs for a plurality of (two) TRPs is notified/configured/indicated to the UE (joint TCI state for a plurality of TRPs).

Further, for example, when N = 2 and M = 2 is described, it may mean that a plurality of (two) UL TCI states and a plurality of (two) DL TCI states for a plurality of (two) TRPs are notified/configured/indicated to the UE (separate TCI states for a plurality of TRPs).

Note that in the above example, the case where the values of N and M are 1 or 2 has been described, but the values of N and M may be 3 or more, and N and M may be different.

It is being considered that N=M=1 will be supported in Rel. 17. It is being considered that other cases will be supported in Rel. 18 and beyond.

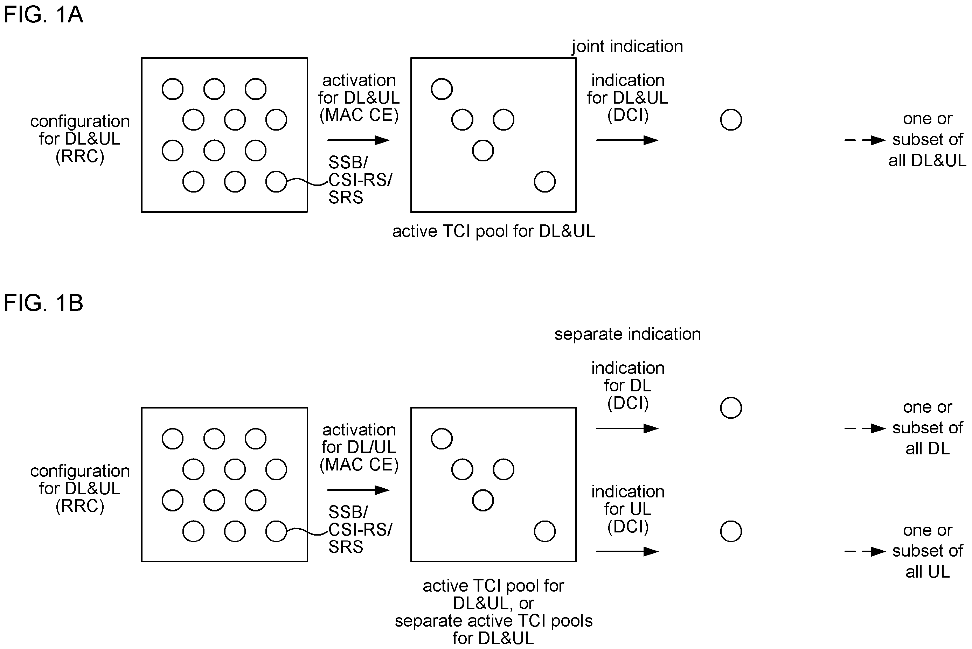

In the example in FIG. 1A, an RRC parameter (information element) configures a plurality of TCI states for both DL and UL. The MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example in the drawing, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 1B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

From Rel-17 NR onwards, it is expected that the MAC CE/DCI will support beam activation/indication to TCI states associated with different physical cell identifiers (PCIs). In addition, from Rel-18 NR onwards, it is expected that MAC CE/DCI will support indicating a change of serving cell to a cell having a different PCI.

### (TCI State Indication)

The Rel-17 Unified TCI Framework supports the following modes 1 to 3.
[Mode 1] MAC CE based TCI state indication
[Mode 2] DCI based TCI state indication by DCI format 1_1/1_2 with DL assignment
[Mode 3] DCI based TCI state indication by DCI format 1_1/1_2 without DL assignment

A UE with a TCI state configured and activated with a Rel-17 TCI State ID (e.g., tci-StateId_r.17) receives DCI format 1_1/1_2 providing an indicated TCI state with the Rel-17 TCI State ID for one CC, or receives DCI format 1_1/1_2 providing an indicated TCI state with the Rel-17 TCI State ID for all CCs in the same CC list as the CC list configured by simultaneous TCI Update List 1 or simultaneous TCI Update List 2 (e.g., simultaneousTCI-UpdateList1 or simultaneousTCI-UpdateList2). DCI format 1_1/1_2 may or may not be accompanied by a DL assignment if one is available.

In a case in which DCI format 1_1/1_2 does not carry a DL assignment, the UE can assume (verify) the following for that DCI:
- The CS-RNTI is used to scramble the CRC for the DCI.
- The values of the following DCI fields (special fields) are set as follows:
   - The redundancy version (RV) field is all '1's.
   - The modulation and coding scheme (MCS) field is all '1's.
   - The new data indicator (NDI) field is 0.
   - the frequency domain resource assignment (FDRA) field is all '0's for FDRA type 0 or all '1's for FDRA type 1 or all '0's for Dynamic Switch (similar to validation of PDCCH for release of DL semi-persistent scheduling (SPS) or UL grant type 2 scheduling).

In Rel. 15/16, in a case in which the UE does not support active BWP change via DCI, the UE shall ignore the BWP indicator field. Similar behavior is being considered with respect to the relationship between support for Rel-17 TCI states and the interpretation of TCI fields. It is considered that in a case in which the UE is configured with Rel-17 TCI state, the TCI field shall always be present in DCI format 1_1/1_2, and in a case in which the UE does not support TCI updating via DCI, the UE shall ignore the TCI field.

In Rel. 15/16, whether or not a TCI field is present (TCI presence information in DCI, tci-PresentInDCI) is configured for each CORESET.

The TCI field in DCI format 1_1 is 0 bits in a case in which the higher layer parameter tci-PresentInDCI is not enabled, and is 3 bits otherwise. In a case in which the BWP indicator field indicates a BWP other than the active BWP, the UE follows the following operation.
[Operation] In a case in which the higher layer parameter tci-PresentInDCI is not enabled for the CORESET used for the PDCCH carrying that DCI format 1_1, the UE shall assume that tci-PresentInDCI is not enabled for all CORESETs in the indicated BWP, otherwise the UE shall assume that tci-PresentInDCI is enabled for all CORESETs in the indicated BWP.

The TCI field in DCI format 1_2 is 0 bits in a case in which the higher layer parameter tci-PresentInDCI-1-2 is not configured, otherwise it is 1, 2 or 3 bits determined by the higher layer parameter tci-PresentInDCI-1-2. In a case in which the BWP indicator field indicates a BWP other than the active BWP, the UE follows the following operation.
[Operation] In a case in which the higher layer parameter tci-PresentInDCI-1-2 is not configured for the CORESET used for the PDCCH carrying that DCI format 1_2, the UE shall assume that tci-PresentInDCI is not enabled for all CORESETs in the indicated BWP, otherwise the UE shall assume that tci-PresentInDCI-1-2 for all CORESETs in the indicated BWP is configured with the same value as tci-PresentInDCI-1-2 configured for the CORESET used for the PDCCH carrying that DCI format 1_2.

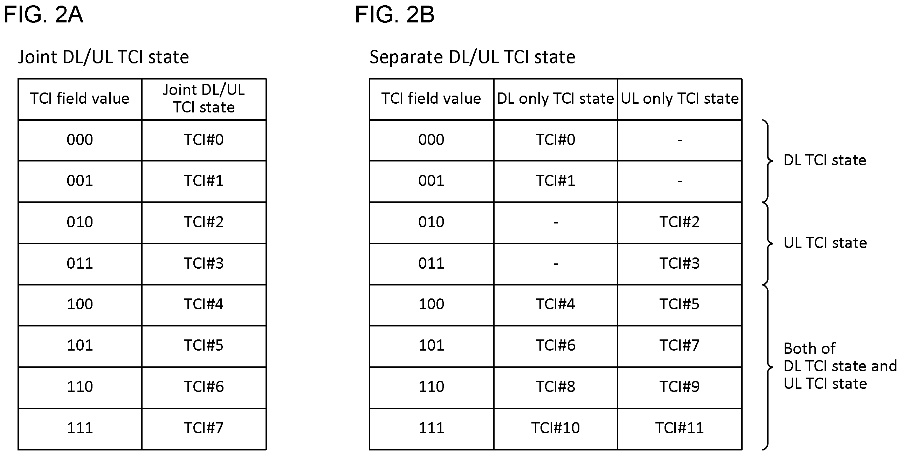

FIG. 2A shows an example of DCI-based joint DL/UL TCI state indication. A TCI state ID indicating the joint DL/UL TCI state is associated with the value of the TCI field for indicating the joint DL/UL TCI state.

FIG. 2B shows an example of DCI-based separate DL/UL TCI state indication. At least one TCI state ID is associated with the value of the TCI field for indicating a separate DL/UL TCI state, including a TCI state ID indicating a DL-only TCI state and a TCI state ID indicating a UL-only TCI state. In this example, TCI field values 000 to 001 are associated with only one TCI state ID for DL, TCI field values 010 to 011 are associated with only one TCI state ID for UL, and TCI field values 100 to 111 are associated with both one TCI state ID for DL and one TCI state ID for UL.

### (Beam Application Time (BAT))

In DCI-based beam indication in Rel. 17, the following considerations 1 and 2 are being considered regarding the application time of the beam/unified TCI state indication (beam application time (BAT) conditions).

### [Consideration 1]

It is considered that the first slot to apply the indicated TCI is at least Y symbols after the last symbol of the acknowledgement (ACK) for the joint or separate DL/UL beam indication. It is considered that the first slot to apply the indicated TCI is at least Y symbols after the last symbol of the ACK/negative acknowledgement (NACK) for the joint or separate DL/UL beam indication. The Y symbol may be configured by the base station based on the UE capabilities reported by the UE. The UE capabilities may be reported in units of symbols.

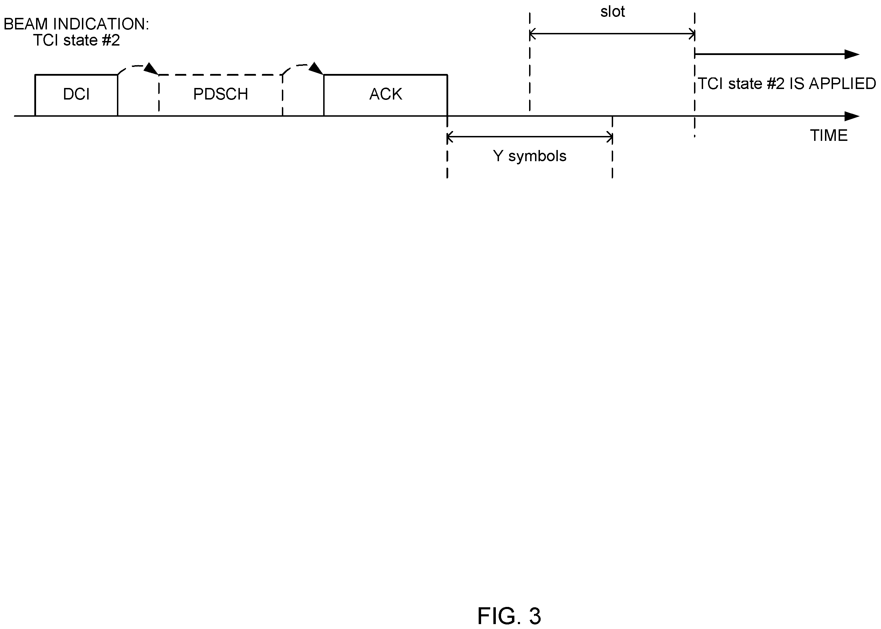

In the example of FIG. 3, the ACK may be an ACK for a PDSCH scheduled by a beam indicating DCI. In this example, the PDSCH does not need to be transmitted. The ACK in this case may be an ACK for a beam indicating DCI.

For a DCI-based beam indication of Rel. 17, it is considered that at least one Y symbol per BWP/CC is configured in the UE.

In a case in which the SCS is different between a plurality of CCs, the value of the Y symbol is also different, so there is a possibility that the application time will be different between a plurality of CCs.

### [Consideration 2]

For the CA case, the application timing/BAT of the beam indication may follow any of the following options 1 to 3.
[Option 1] Both the first slot and the Y symbol are determined on the carrier with the smallest SCS among the one or more carriers to which the beam indication applies.
[Option 2] Both the first slot and the Y symbol are determined on the carrier with the smallest SCS among the one or more carriers to which the beam indication applies and the UL carrier carrying the ACK.
[Option 3] Both the first slot and the Y symbol are determined on the UL carrier that carries the ACK.

As part of a CC simultaneous beam update function of Rel. 17, it is being considered to share beams between a plurality of CCs in CA. According to consideration 2, the application time is common among a plurality of CCs.

The application time (Y symbols) of beam indication for CA may be determined on the carrier with the smallest SCS among the carriers to which beam indication is applied. The MAC CE based beam indication (when only a single TCI codepoint is activated) of Rel. 17 may follow the Rel-16 application timeline for MAC CE activation.

Based on these considerations, the following operation is being considered for inclusion in the specifications.

### [Operation]

In a case in which the UE transmits the last symbol of the PUCCH accompanied by HARQ-ACK information corresponding to a DCI carrying a TCI state indication, the indicated TCI state accompanied by a Rel-17 TCI state may start to be applied from the first slot that is at least Y symbols after the last symbol of that PUCCH. Y may be a higher layer parameter (e.g., BeamAppTime_r17[symbol]). Both the first slot and the Y symbol may be determined on the carrier with the smallest SCS among the carriers to which the beam indication is applied. The UE may assume one indicated TCI state with Rel-17 TCI states for DL and UL at a given point in time, or one indicated TCI state with Rel-17 TCI states for UL (separate from DL).

X [ms] may be used instead of Y [symbol].

Regarding the application time, it is considered that the UE reports at least one of the following UE capabilities 1 and 2.

### [UE Capability 1]

Minimum application time per SCS (minimum value of Y symbol between the last symbol of the PUCCH carrying ACK and the first slot in which the beam is applied).

### [UE Capability 2]

The minimum time gap between the last symbol of the beam indication PDCCH (DCI) and the first slot in which the beam is applied. A gap between the last symbol of the beam indication PDCCH (DCI) and the first slot in which the beam is applied may meet the UE capabilities (minimum time gap).

The UE capability 2 may be an existing UE capability (e.g., timeDurationForQCL).

The beam indication and the relationship with the channel/RS to which the beam is applied may satisfy at least one of the UE capabilities 1 and 2.

Regarding the application time, the parameters configured by the base station (e.g., BeamAppTime_r17) may be optional fields.

### (Indication Rel-17 TCI State/Configuration Rel-17 TCI State)

With respect to the Rel-17 TCI state, the unified/common TCI state may mean the Rel-17 TCI state indicated using (Rel. 17) DCI/MAC CE/RRC (indicated Rel-17 TCI state). In the present disclosure, the indicated Rel-17 TCI state, the indicated TCI state, the unified/common TCI state, and the TCI state applied to a plurality of types of signals (channels/RS) may be interpreted as interchangeable.

The indicated Rel-17 TCI state may be shared with at least one of the UE-specific reception on PDSCH/PDCC (updated using Rel-17 DCI/MAC CE/RRC), PUSCH of dynamic grant (DCI)/configured grant, and plurality of (e.g., all) dedicated PUCCH resources. The TCI state indicated by DCI/MAC CE/RRC may be referred to as the indicated TCI state or the unified TCI state.

With respect to the Rel-17 TCI state, a TCI state other than the unified TCI state may mean a Rel-17 TCI state configured using (Rel. 17) MAC CE/RRC (configured Rel-17 TCI state). In the present disclosure, the configured Rel-17 TCI state, the configured TCI state, a TCI state other than the unified TCI state, and a TCI state applied to a specific type of signal (channel/RS) may be interpreted as interchangeable.

The configured Rel-17 TCI state may not be shared with at least one of the UE-specific reception on PDSCH/PDCC (updated using Rel-17 DCI/MAC CE/RRC), PUSCH of dynamic grant (DCI)/configured grant, and a plurality of (e.g., all) dedicated PUCCH resources. The configured Rel-17 TCI state is configured by RRC/MAC CE for each CORESET/each resource/each resource set, and may be configured such that even when the above-mentioned indicated Rel-17 TCI state (common TCI state) is updated, the configured Rel-17 TCI state is not updated.

It is considered that the indicated Rel-17 TCI state is applied to UE specific channels/signals (RS). In addition, it is considered to notify the UE of whether the indicated Rel-17 TCI state or the configured Rel-17 TCI state is to be applied to non-UE-specific channels/signals using higher layer signalling (RRC signalling).

It is being considered that the RRC parameters related to the configured Rel-17 TCI state (TCI state ID) will have the same configuration as the RRC parameters of the TCI state in Rel. 15/16. It is considered that the configured Rel-17 TCI state will be configured/indicated per CORESET/per resource/per resource set using RRC/MAC CE. In addition, it is also considered that the UE will make a decision regarding the configuration/indication based on specific parameters.

It is considered that the UE is updated with a separate indicated TCI state and a separate configured TCI state. For example, for a UE, in a case in which the unified TCI state for the indicated TCI state is updated, an update of the configured TCI state need not be performed. In addition, it is also being considered that the UE will make a decision regarding the update based on specific parameters.

In addition, it is being considered to use higher layer signalling (RRC/MAC CE) to switch between whether the indicated Rel-17 TCI state is applied to the PDCCH/PDSCH or not (the configured Rel-17 TCI state is applied, or a TCI state configured separately from the indicated Rel-17 TCI state is applied).

Moreover, for intra-cell beam indication (TCI state indication), it is being considered that the indicated Rel-17 TCI state will be supported for a UE-specific CORESET and a PDSCH associated with the CORESET, and a non-UE-specific CORESET and a PDSCH associated with the CORESET.

Furthermore, for inter-cell beam indication (e.g., L1/L2 inter-cell mobility), it is being considered that the indicated Rel-17 TCI state will be supported for a UE-specific CORESET and the PDSCH associated with the CORESET.

In Rel. 15, it was up to base station implementation whether to indicate a TCI state for CORESET#0. In Rel. 15, for CORESET#0 for which a TCI state is indicated, the indicated TCI state is applied. For CORESET #0 for which the TCI state is not indicated, the SSB and QCL selected at the time of the latest (most recent) PRACH transmission are applied.

In the unified TCI state framework for Rel. 17 and later, the TCI state for CORESET#0 is being considered.

For example, in the unified TCI state framework for Rel. 17 and later, for the Rel-17 TCI state indication of CORESET #0, whether or not to apply the indicated Rel-17 TCI state associated with the serving cell is configured by RRC for each CORESET, and if not applied, the legacy MAC CE/RACH signalling mechanism may be used.

Note that the CSI-RS associated with the Rel-17 TCI state applied to CORESET#0 may be quasi co-located with the SSB associated with the serving cell PCI (physical cell ID) (similar to Rel. 15).

For CORESET #0, a CORESET with a common search space (CSS), and a CORESET with a CSS and a UE-specific search space (USS), whether to follow the indicated Rel-17 TCI state may be configured for each CORESET by an RRC parameter. In a case in which the CORESET is not configured to follow the indicated Rel-17 TCI state, the configured Rel-17 TCI state may be applied to the

### CORESET.

For non-UE-dedicated channels/RSs (except CORESET), whether to follow the indicated Rel-17 TCI state or not may be configured by an RRC parameter for each channel/resource/resource set. In a case in which the channel/resource/resource set is not configured to follow the indicated Rel-17 TCI state, the configured Rel-17 TCI state may apply to that channel/resource/resource set.

### (Intra-Cell/Inter-Cell Beam Indication/Management)

In Rel-17 NR and later, it is expected that the MAC CE/DCI will support beam indication to TCI states associated with different PCIs. In addition, from Rel-18 NR onwards, it is expected that MAC CE/DCI will support indicating a change of serving cell to a cell having a different PCI.

The indicated Rel-17 TCI state may be shared (applied) to UE-dedicated channels/RS and non-UE-dedicated channels/RS within a cell.

The indicated Rel-17 TCI state may be shared (applied) between cells only to UE-dedicated channels/RS.

Between cells, for non-UE-dedicated channels/RS, whether to follow the indicated Rel-17 TCI state for each PDSCH (PDSCH configuration)/CORESET (CORESET configuration) may be configured by an RRC parameter. UE-dedicated channels/RS may not follow the RRC parameters thereof and always follow the indicated Rel-17 TCI state.

In the present disclosure, a non-UE-specific CORESET may mean a CORESET with CSS, and a UE-specific CORESET may mean a CORESET with USS. In the present disclosure, a non-UE-dedicated PDSCH may mean a PDSCH scheduled by a CORESET with a CSS, or a PDSCH scheduled by a CORESET with a CSS other than a type 3 CSS. In the present disclosure, a UE-dedicated PDSCH may mean a PDSCH scheduled by a CORESET with a USS, or may mean a PDSCH scheduled by a CORESET with a USS or a type 3 CSS. For example, for each PDSCH configuration (PDSCH-Config), whether to follow the indicated Rel-17 TCI state is configured by an RRC parameter (e.g., followUnifiedTCIstate), and this configuration may not be applied to a UE-dedicated PDSCH (UE-dedicated PDSCH always follows the Rel-17 TCI state) but may be applied to a non-UE-dedicated PDSCH.

### (Default QCL Assumption for PDSCH)

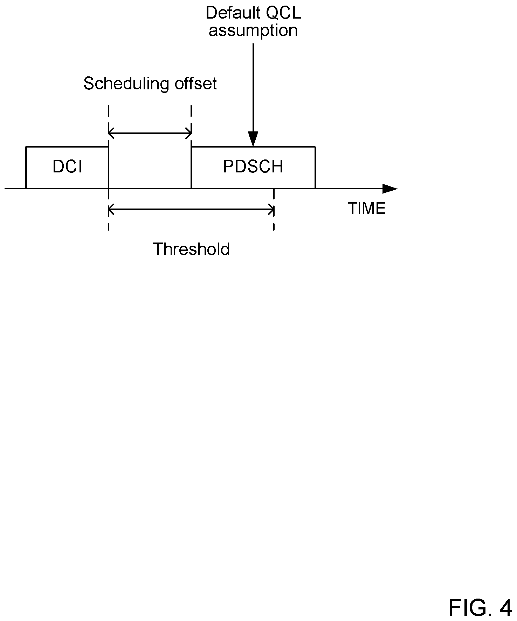

In an RRC connected mode, regardless of the configuration of the presence of the TCI field in the DCI (higher layer parameters tci-PresentInDCI and tci-PresentInDCI-1-2), in a case in which the offset (time offset, scheduling offset) between the reception of a DL DCI (PDSCH scheduling DCI) and the corresponding PDSCH (PDSCH scheduled by that DCI) is less than a threshold (timeDurationForQCL) and at least one configured TCI state for the serving cell of that scheduled PDSCH includes a QCL type (qcl-Type) set to type D (typeD), the UE shall perform the following operations:
- The UE assumes that the DMRS port of the PDSCH of the serving cell is quasi co-located to the RS(s) for the QCL parameters used for the PDCCH quasi co-location (QCL) indication on the CORESET associated with the monitored search space, where one or more CORESETs in the active BWP of that serving cell quasi co-located with the CORESET with the lowest CORESET-ID (controlResourceSetId) in the latest slot monitored by the UE (default QCL assumption/default TCI state for PDSCH (FIG. 4)).

When a PDCCH carrying a scheduling DCI is received on one CC and the PDSCH scheduled by that DCI is on another CC and the UE is configured with enableDefaultBeamForCCS, in a case in which the offset between the reception of the DL DCI and the corresponding PDSCH is less than a threshold (timeDurationForQCL) or the DL DCI does not have a TCI field present, the UE derives the QCL assumption for the scheduled PDSCH from the active TCI state with the lowest ID among the active TCI states applicable to the PDSCH in the active BWP of the scheduled cell.

Before decoding the DL DCI, the UE does not know whether a PDSCH is scheduled or not, and thus the UE should buffer the DL signal using a certain QCL assumption. In Rel. 15/16, three default QCL assumptions (for single TRP, for single DCI based multi-TRP, and for multi-DCI multi-TRP) are defined, they are switched by RRC.

### (Channel/RS to Which the Indicated TCI State is Applied)

The indicated TCI state by the MAC CE/DCI may be applied to the following channels/RS:
[PDCCH]
   - In a case in which followUnifiedTCIState is configured for CORESET0, the indicated TCI state is applied. Otherwise, the Rel-15 specifications are applied for that CORESET. That is, CORESET0 follows the TCI state activated by the MAC CE or is quasi co-located with SSB.
   - For a CORESET with an index other than 0 with USS/CSS type 3, the indicated TCI state is always applied.
   - In a state of being configured to followUnifiedTCIState for a CORESET with an index other than 0 and with at least a CSS other than CSS type 3, the indicated TCI state is applied. In cases other than this, the configured TCI state for that CORESET is applied to that CORESET.
[PDSCH]
   - The indicated TCI state is always applied for all UE-dedicated PDSCHs.
   - For non-UE-dedicated PDSCH (PDSCH scheduled by DCI in CSS), in a case of being configured to followUnifiedTCIState, the indicated TCI state may be applied. In cases other than this, the configured TCI state for that PDSCH is applied to that PDSCH. It is not necessary for the PDSCH to be configured to followUnifiedTCIState. In this case, whether or not a non-UE-dedicated PDSCH complies with the indicated TCI state may be determined depending on whether or not the CORESET used for scheduling the PDSCH is configured to followUnifiedTCIState.
[CSI-RS]
   - In a case in which the A-CSI-RS for CSI acquisition or beam management is configured to followUnifiedTCIState, the indicated TCI state is applied. For other CSI-RSs, the configured TCI state for that CSI-RS is applied.
[PUCCH]
   - For all dedicated PUCCH resources, the indicated TCI state is always applied.
[PUSCH]
   - For dynamic/configured grant PUSCH, the indicated TCI state is always applied.
[SRS]
   - In a case in which the SRS resource set for A-SRS for beam management and A/SP/P-SRS for codebook/non-codebook/antenna switching is configured to followUnifiedTCIState, the indicated TCI state is always applied. For other SRSs, the configured TCI state in that SRS resource set is applied.

However, the relation between the PDSCH and the unified TCI state/indicated TCI state is not clear. In a case in which such a relation is not clear, it may result in a deterioration in communication quality and a decrease in throughput.

Thus, the inventors of the present invention came up with the idea of a method of determining QCL assumptions.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support, " "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, a reference signal for QCL, a UL transmission (TX) spatial filter, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

In the present disclosure, "Rel. XX" refers to a 3GPP release. However, the release number "XX" is just an example and may be replaced with another number.

In the present disclosure, the terms search space and search space set may be interpreted as interchangeable. In the present disclosure, type x CSS, type x-PDCCH CSS, and type x-PDCCH CSS set may be interpreted as interchangeable.

In the present disclosure, the quasi co-location (QCL) assumption for a DMRS port of a PDSCH, an RS that is quasi co-located with the DMRS port of a PDSCH, and the QCL assumption/TCI state of a PDSCH may be interpreted as interchangeable.

### (Radio Communication Method)

In each embodiment, a UE-dedicated PDSCH and a PDSCH scheduled by DCI in a USS or a type 3 CSS may be read as interchangeable. In each embodiment, a non-UE-dedicated PDSCH and a PDSCH scheduled by a DCI in a CSS other than a type 3 CSS may be read as interchangeable.

In each embodiment, the following may be interpreted as mutually interchangeable: the PDSCH (UE-dedicated PDSCH/non-UE-dedicated PDSCH) following the unified TCI state, the CORESET used for scheduling the PDSCH following the unified TCI state, the configuration (ControlResourceSet) of the CORESET to follow the unified TCI state/indicated TCI state (followUnifiedTCIState), and the configuration (PDSCH-Config) of the PDSCH to follow the unified TCI state/indicated TCI state (followUnifiedTCIState).

In each embodiment, a PCI different from the serving cell PCI, a non-serving cell PCI, and a non-serving cell may be read as interchangeable.

### <Embodiment #1>

This embodiment relates to QCL assumptions for UE-dedicated PDSCH (PDSCH scheduled by DCI in USS or in type 3 CSS).

The QCL assumption for the UE dedicated PDSCH may be the indicated TCI state. In both the case where the indicated TCI state is associated with the serving cell PCI and the case where the indicated TCI state is associated with a PCI different from the serving cell PCI, the indicated TCI state may be applied to the QCL assumption for the UE-dedicated PDSCH.

It may be assumed that the followUnifiedTCIState is always configured in the CORESET for scheduling that PDSCH, or configured to the PDSCH configuration. In a case in which the followUnifiedTCIState is configured in the CORESET for scheduling that PDSCH or in the PDSCH configuration, the QCL assumption for that PDSCH may be the indicated TCI state.

According to this embodiment, the UE can appropriately determine the QCL assumption for the UE-dedicated PDSCH.

### <Embodiment #2>

This embodiment relates to QCL assumptions for non-UE-dedicated PDSCH (PDSCH scheduled by DCI in a CSS other than type 3

### CSS).

### <<Embodiment #2-1>>

For a non-UE-dedicated PDSCH, in a case in which followUnifiedTCIState is configured in the CORESET for scheduling or in the PDSCH configuration, the QCL assumption for that PDSCH may be the indicated TCI state.

In a case in which the indicated TCI state is associated with the serving cell PCI, no problem occurs.

It may be specified that in a case in which the indicated TCI state is associated with a PCI different from the serving cell PCI, then the UE is not required (or expected) to receive that non-UE-dedicated PDSCH.

It is considered that the indicated TCI state associated to a PCI different from the serving cell PCI is not applicable to a non-UE-dedicated PDCCH/PDSCH.

In a case in which followUnifiedTCIState is configured in the CORESET for scheduling or in the PDSCH configuration, it may be specified that the UE shall be in the indicated TCI state that is applied to a non-UE-dedicated PDSCH (PDSCH scheduled by a DCI in a CSS other than a type 3 CSS), and it is not assumed that the indicated TCI state associated with a PCI different from the serving cell PCI is indicated.

In a case in which followUnifiedTCIState is configured in the CORESET for scheduling or in the PDSCH configuration, and the UE is indicates an indicated TCI state associated with a PCI different from the serving cell PCI, it may be specified that the UE does not assume that a non-UE-dedicated PDSCH (a PDSCH scheduled by a DCI in a CSS other than a type 3 CSS) is scheduled.

In a case in which followUnifiedTCIState is configured in the CORESET for scheduling or in the PDSCH configuration, and the UE is indicates an indicated TCI state associated with a PCI different from the serving cell PCI, it may be specified that the UE is not required to receive a non-UE-dedicated PDSCH (a PDSCH scheduled by a DCI in a CSS other than a type 3 CSS).

In a case in which the UE is configured with at least one TCI state associated with a PCI different from the serving cell PCI, it may be specified that the UE is not expected to be an indicated TCI state that is applied to a non-UE-dedicated PDSCH (PDSCH scheduled by DCI in a CSS other than type 3 CSS).

### <<Embodiment #2-2>>

For a non-UE-dedicated PDSCH, in a case in which followUnifiedTCIState is not configured in the CORESET for scheduling or in the PDSCH configuration, the QCL assumption for that PDSCH may be the configured TCI state. The configured TCI state may be according to any of the following embodiments #2-2-1 and #2-2-2.

### [Embodiment #2-2-1]

RRC IE/MAC CE may configure/indicate the TCI state for the CORESET for scheduling or for the PDSCH configuration. If the TCI state is configured/indicated, the QCL assumption for the non-UE-dedicated PDSCH may be the same as the configured TCI state. In a case in which the configured TCI state is set to CORESET, the QCL assumption for a PDSCH may be derived from the QCL assumption for the scheduling CORESET of that PDSCH.

### [Embodiment #2-2-2]

The RRC IE/MAC CE may configure/indicate a plurality of (active) TCI states for CORESET for scheduling or for the PDSCH configuration. In a case in which a plurality of TCI states are configured/indicated, the QCL assumption for the non-UE-dedicated PDSCH may be selected from the plurality of configured TCI states. For example, the scheduling DCI for that PDSCH may indicate one of a plurality of configured TCI states via a TCI field. A list of a plurality of configured TCI states may be the same as or may be different from a list/pool of the TCI states for the unified TCI state.

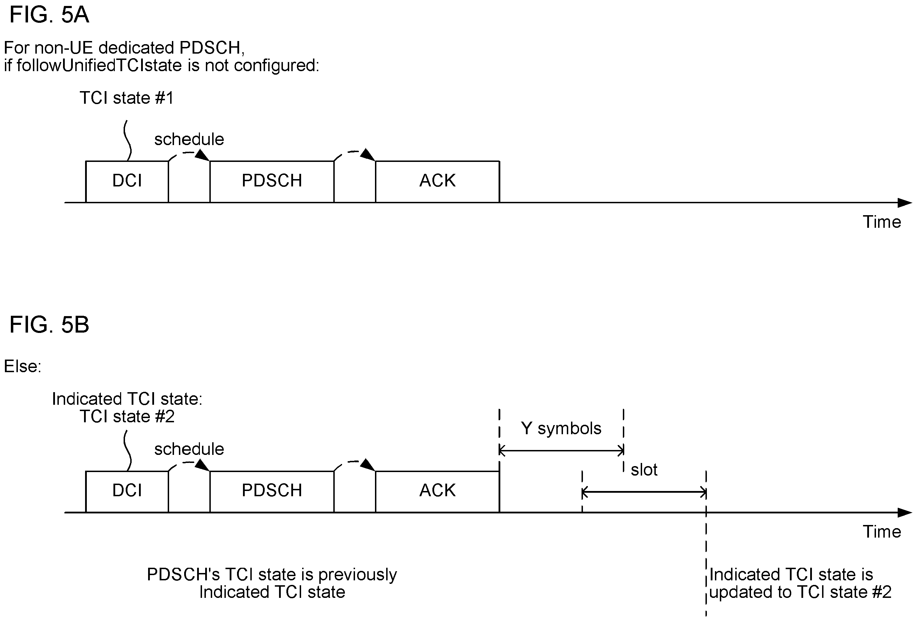

FIG. 5A shows an example of the operation of Embodiment #2-2-2 for a non-UE-dedicated PDSCH in a case in which followUnifiedTCIState is not configured to CORESET for scheduling or to the PDSCH configuration. The DCI scheduling the non-UE-dedicated PDSCH indicates a TCI state #1 among a plurality of configured TCI states. The TCI state #1 is applied to the PDSCH. In the case of Embodiment #2-2-1, the TCI state of the PDSCH may be one configured TCI state configured/indicated by the RRC IE/MAC CE, or it may be the same TCI state as the scheduling CORESET.

FIG. 5B shows an example of an operation in a case in which for a non-UE-dedicated PDSCH, followUnifiedTCIState is configured to the CORESET for scheduling or to the PDSCH configuration. The DCI scheduling the non-UE-dedicated PDSCH indicates a common beam (unified TCI state) TCI state #2. In a case in which the start timing of the PDSCH is earlier than the application timing of the beam indication (in a case in which the beam application time condition is not met), the TCI state of the PDSCH is the previously indicated TCI state.

According to this embodiment, the UE can appropriately determine the QCL assumption for the non-UE-dedicated PDSCH.

### <Embodiment #3>

This embodiment relates to a default QCL assumption for the PDSCH.

### <<Embodiment #3-1>>

For PDSCH (both UE-dedicated PDSCH and non-UE-dedicated PDSCH), in a case in which followUnifiedTCIState is configured to the CORESET for scheduling or to the PDSCH configuration, the QCL assumption for that PDSCH may be the indicated TCI state.

In this case, there is no need to specify a QCL assumption (default QCL assumption) for a case in which the scheduling offset (the time offset between the reception of a DL DCI and the corresponding PDSCH scheduled thereby) is less than a threshold (e.g., timeDurationForQCL).

As described in Embodiment #2, in a case in which the indicated TCI state is associated with a non-serving cell PCI (a PCI different from the serving cell PCI), it is difficult for the UE to receive a non-UE-dedicated PDSCH. In order to enable the UE to receive a non-UE-dedicated PDSCH from the serving cell, the base station preferably updates the indicated TCI state associated with the serving cell PCI.

### <<Embodiment #3-2>>

For a UE-dedicated PDSCH, in a case in which followUnifiedTCIState is not configured to the CORESET for scheduling or to the PDSCH configuration, the QCL assumption for that UE-dedicated PDSCH may be the indicated TCI state.

For a non-UE-dedicated PDSCH, in a case in which followUnifiedTCIState is not configured to the CORESET for scheduling or to the PDSCH configuration, the QCL assumption for that non-UE-dedicated PDSCH may be the configured TCI state.

In this case, the UE does not know whether the scheduling DCI is in a USS or a type 3 CSS (whether the search space associated with the CORESET of the scheduling DCI is a USS or a type 3 CSS) before completing decoding of the scheduling DCI. In other words, the UE does not know whether the scheduled PDSCH is a UE-dedicated PDSCH or not before completing the decoding of the scheduling DCI. In this case, the default QCL assumption needs to be taken into account.

The default QCL assumption may be any of the following embodiments #3-2-1 and #3-2-2.

### [Embodiment #3-2-1]

The default QCL assumption may be defined as the indicated TCI state in the Rel-17 unified TCI state.

In a case in which the indicated TCI state is associated with the serving cell PCI, there may be no restriction on reception of the PDSCH.

In a case in which the indicated TCI state is associated with a PCI different from the serving cell PCI, the UE may follow either of the following operations 1A and 1B.

### [Operation 1A]

In a case in which the scheduling offset is less than a threshold value, the UE is not required to receive PDSCH (regardless of whether it is a UE-dedicated PDSCH or a non-UE-dedicated PDSCH). In other words, the base station preferably schedules a PDSCH whose scheduling offset is equal to or greater than a threshold value.

### [Operation 1B]

In a case in which the scheduling offset is less than the threshold value, the UE is not required to receive the non-UE-dedicated PDSCH. Preferably, the base station schedules a non-UE-dedicated PDSCH with a scheduling offset equal to or greater than the threshold value.

### [Embodiment #3-2-2]

The default QCL assumption may be the same as the default QCL assumption for Rel. 15/16. The UE may determine the default QCL assumption similar to Rel. 15/16.

In a case in which the determined default QCL assumption is associated with the serving cell PCI, there may be no restriction on receiving the PDSCH.

In a case in which the determined default QCL assumption is associated with a PCI different from the serving cell PCI, the UE may follow either of the following operations 2A and 2B.

### [Operation 2A]

In a case in which the scheduling offset is less than a threshold value, the UE is not required to receive PDSCH (regardless of whether it is a UE-dedicated PDSCH or a non-UE-dedicated PDSCH). In other words, the base station preferably schedules a PDSCH whose scheduling offset is equal to or greater than a threshold value.

### [Operation 2B]

In a case in which the scheduling offset is less than the threshold value, the UE is not required to receive the non-UE-dedicated PDSCH. Preferably, the base station schedules a non-UE-dedicated PDSCH with a scheduling offset equal to or greater than the threshold value.

It may be specified that the UE does not assume that the default QCL assumption is associated with a PCI different from the serving cell PCI. The base station preferably configures the TCI state associated with the serving cell PCI to the lowest CORESET-ID in the most recent monitoring slot.

According to this embodiment, the UE can appropriately determine the default QCL assumption for the PDSCH.

### <Variation of Embodiment #3>

This embodiment relates to a default QCL assumption for the PDSCH.

The reason why a default QCL assumption for PDSCH is defined in Rel. 15 is that the UE needs to receive the PDSCH before completing decoding of the DCI of the scheduling PDCCH and buffer the received signal with a certain QCL assumption. In Rel. 17, an indicated TCI state is applied after a beam application time from the last symbol of the corresponding HARQ-ACK information thereof. This timing is clearly after the completion of the decoding of the DCI that schedules the PDSCH.

### <<Embodiment #3a-1>>

In a case in which followUnifiedTCIState is configured, the default QCL assumption does not need to be considered. In this case, the QCL assumption for the PDSCH may always be in the indicated TCI state, regardless of whether the PDSCH is UE-dedicated or not. In a case in which the indicated TCI state is associated with a PCI different from the serving cell PCI, the UE may not be required to receive PDSCH scheduled by a CORESET with a CSS other than a type 3 CSS (non-UE-dedicated PDSCH).

In a case in which the followUnifiedTCIState is configured to the PDSCH (or to the CORESET for scheduling that PDSCH), the indicated TCI state may always be applied to the PDSCH. In a case in which the indicated TCI state is associated with a PCI different from the serving cell PCI, it may be specified that the UE is not required to receive PDSCH scheduled by a CORESET with a CSS other than Type 3 CSS (non-UE-dedicated PDSCH).

### <<Embodiment #3a-2>>

In a case in which the followUnifiedTCIState is not configured, the PDSCH QCL assumption may be determined depending on whether the QCL assumption is UE-dedicated. Before completing DCI decoding, it is difficult for a UE to identify whether or not the PDSCH scheduled by that DCI is UE-dedicated or not (whether or not the search space associated with the CORESET of that DCI is a type 3 CSS). Therefore, it is necessary to define certain QCL assumptions for reception of the PDSCH before completion of DCI decoding. The QCL assumption may follow any of options 1 to 3 below.

### [Option 1]

As the QCL assumption, the default QCL assumption for PDSCH in Rel. 15/16 may be reused. Since a non-UE-dedicated PDSCH may be shared with Rel. 15/16, it would be preferable to have the same QCL assumptions. On the other hand, most base station operations in Rel. 15/16 are self-slotted scheduling (scheduling PDCCH and scheduled PDSCH are in the same slot, scheduling offset is less than timeDurationForQCL). Therefore, this option means that in a case in which the followUnifiedTCIState is not configured, the default QCL assumptions of Rel. 15/16 will be applied to the PDSCH in most cases.

### [Option 2]

As the QCL assumption, an indicated TCI state may be applied. It may seem odd to apply the indicated TCI state in a case in which followUnifiedTCIState is not configured. It is also considered that the indicated TCI state associated with a PCI different from the serving cell PCI cannot be applied to a non-UE-dedicated PDCCH/PDSCH. Therefore, the non-UE-dedicated PDSCH may be scheduled with a scheduling offset equal to or greater than timeDurationForQCL.

In a case in which the followUnifiedTCIState is not configured to the PDSCH (or to the CORESET for scheduling that PDSCH), and in a case in which the scheduling offset is less than timeDurationForQCL, it may be specified that the UE is not required to receive PDSCH scheduled by a CORESET with a CSS other than Type 3 CSS (non-UE-dedicated PDSCH).

### [Option 3]

As the QCL assumption, a configured TCI state may be applied. If the scheduling offset is greater than or equal to timeDurationForQCL, the configured TCI state may be applied to the non-UE-dedicated PDSCH. In a case in which the scheduling offset is smaller than timeDurationForQCL, the configured TCI state may be applied to the PDSCH (UE-dedicated PDSCH and non-UE-dedicated PDSCH). In a case in which the configured TCI state is intended to configure a non-UE-dedicated PDSCH from a serving cell and the scheduling offset is smaller than timeDurationForQCL, in option 3, it may not be possible to schedule a non-UE-dedicated PDSCH/UE-dedicated PDSCH from a non-serving cell.

In a case in which the PDSCH is scheduled with a scheduling offset equal to or greater than timeDurationForQCL, the indicated TCI state may be applied to PDSCH scheduled by USS or CORESET with type 3 CSS (UE-dedicated PDSCH).

### <Supplementary Information>

### <<UE Capability Information/Higher Layer Parameters>>

At least one of the above-described embodiments may be applied only to UEs that have reported or support a particular UE capability.

The specific UE capabilities may indicate at least one of the following:
- Supporting the processing/operation/control/information for at least one of the above embodiments.
- Supporting default QCL assumptions for uniform/indicated TCI states. The corresponding UE capability reporting/RRC parameter configuration may be applied to at least one of UE-dedicated PDSCH and non-UE-dedicated PDSCH. The corresponding UE capability reporting/RRC parameter configuration may be applied to at least one of a PDSCH using a TCI state associated with the serving cell PCI and a PDSCH using a TCI state associated with a PCI different from the serving cell PCI.
- Supporting that the QCL assumption/TCI state of PDSCH/UE-dedicated PDSCH/non-UE-dedicated PDSCH is the indicated TCI state (unified TCI state).
- Supporting the default QCL assumption for PDSCH/UE-dedicated PDSCH/non-UE-dedicated PDSCH to be the indicated TCI state (unified TCI state).

In addition, the above-mentioned specific UE capabilities may be capabilities that are applied across all frequencies (commonly regardless of frequency), capabilities for each frequency (e.g., cell, band, BWP), capabilities for each frequency range (e.g., Frequency Range 1 (FR1), FR2, FR3, FR4, FR5, FR2-1, FR2-2), or capabilities for each subcarrier spacing (SubCarrier Spacing (SCS)).

Furthermore, the above-mentioned specific UE capability may be a capability that is applied across all duplexing methods (commonly regardless of the duplexing method), or may be a capability for each duplexing method (e.g., Time Division Duplex (TDD) and Frequency Division Duplex (FDD)).

Moreover, at least one of the above-described embodiments may be applied in a case in which the UE is configured with specific information related to the above-described embodiments by higher layer signalling. For example, the specific information may be information indicating enabling at least one feature of the above-described embodiments, any RRC parameters for a particular release (e.g., Rel. 18), or the like. The name of the RRC parameter may be suffixed with _r18.

In a case in which the UE does not support at least one of the specific UE capabilities or is not configured with the specific information, the UE may, for example, apply Rel-15/16 operations.

The above UE capabilities/higher layer parameters allow the UE to achieve the above functions while maintaining compatibility with existing specifications.

### (Supplementary Note)

Regarding one embodiment of the present disclosure, the following supplementary notes of the invention will be given.

### {Supplementary Note 1}

A terminal including:
a receiving section that receives a configuration indicating whether scheduling of a physical downlink shared channel (PDSCH) follows a specific transmission configuration indication (TCI) state that is applied to a plurality of types of signals, including downlink and uplink, and downlink; and
a control section that determines a quasi co-location (QCL) assumption for a demodulation reference signal (DMRS) port of the PDSCH based on the configuration.

### {Supplementary Note 2}

The terminal according to supplementary note 1, wherein the PDSCH is scheduled by downlink control information within a user equipment (UE) specific search space set or a Type 3-Physical Downlink Control Channel (PDCCH) Common Search Space (CSS) set.

### {Supplementary Note 3}

The terminal according to supplementary note 1, wherein the PDSCH is scheduled by downlink control information in a CSS set other than a Type 3-PDCCH CSS set.

### {Supplementary Note 4}

The terminal according to any one of supplementary notes 1 to 3, wherein in a case in which the scheduling does not follow the specific TCI state and the time offset between the downlink control information scheduling the PDSCH and the PDSCH is less than a threshold value, the specific TCI state is used as the QCL assumption.

### (Radio Communication System)

Hereinafter, a structure of a radio communication system according to one embodiment of the present disclosure will be described. In this radio communication system, any of the radio communication methods according to each embodiment of the present disclosure described above may be used alone or may be used in combination for communication.

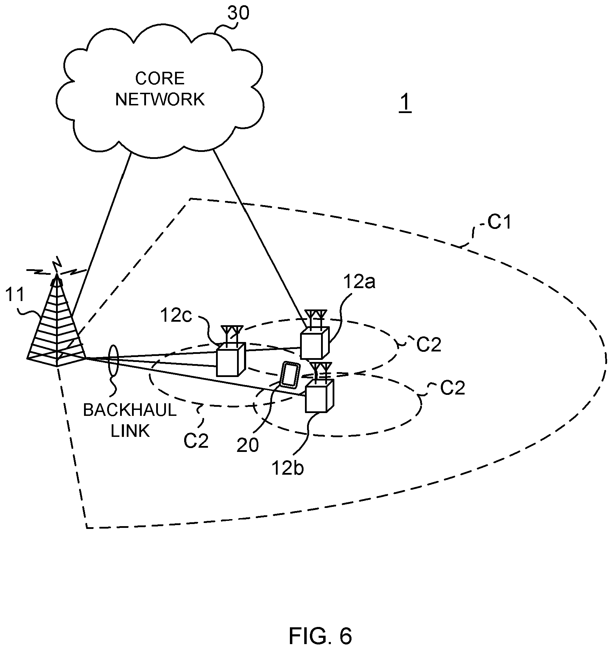

FIG. 6 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

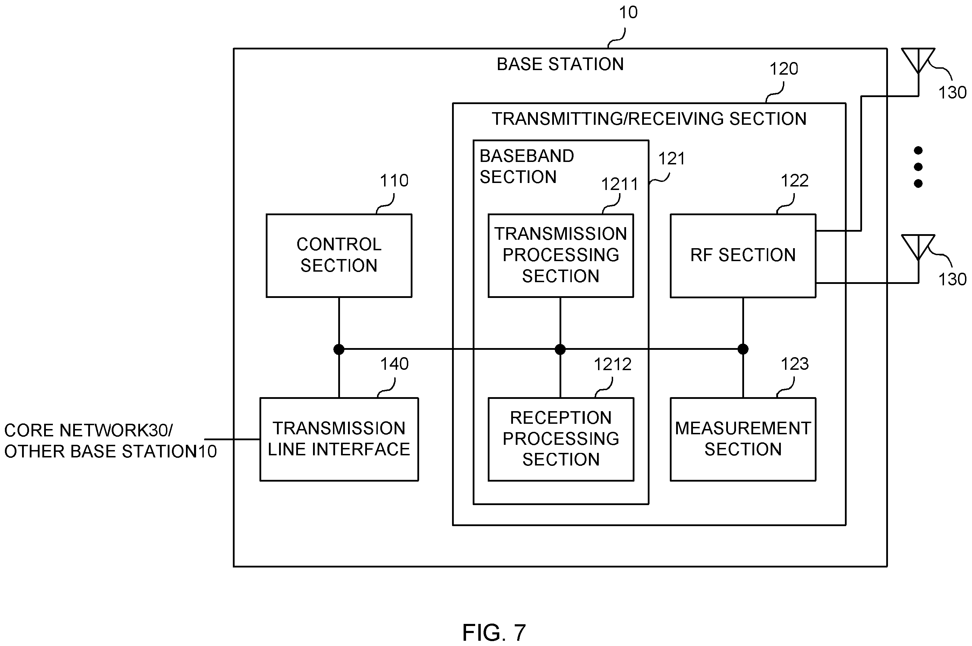

FIG. 7 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a configuration indicating whether scheduling of a physical downlink shared channel (PDSCH) follows a specific transmission configuration indication (TCI) state that is applied to any one of a plurality of types of signals, including downlink and uplink, and downlink.

The control section 110 may determine a quasi co-location (QCL) assumption for a demodulation reference signal (DMRS) port of the PDSCH based on the configuration.

### (User Terminal)

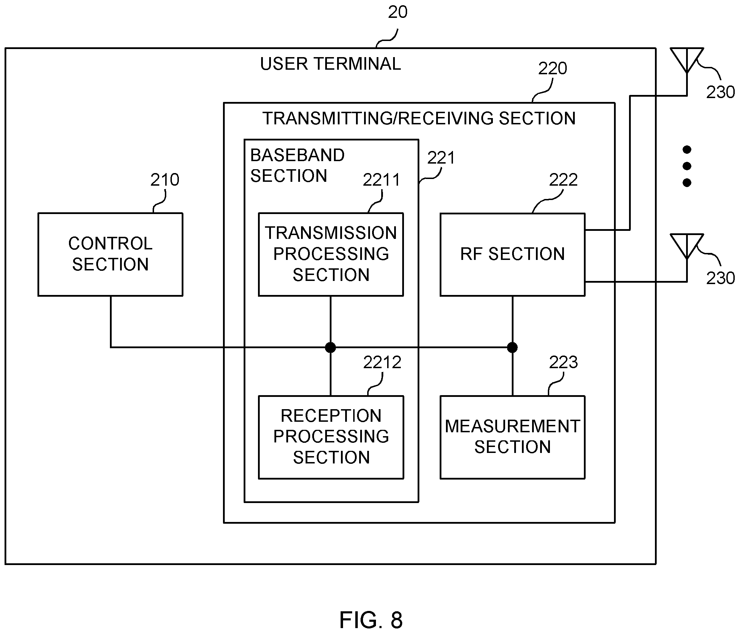

FIG. 8 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration (CORESET configuration (ControlResourceSet)/PDSCH configuration (PDSCH-Config)) indicating whether scheduling of a physical downlink shared channel (PDSCH) follows a specific transmission configuration indication (TCI) state (indicated TCI state/unified TCI state) that is applied to a plurality of types of signals, including downlink and uplink, and downlink; and The control section 210 may determine a quasi co-location (QCL) assumption for a demodulation reference signal (DMRS) port of the PDSCH based on the configuration.

The PDSCH may be scheduled by downlink control information within a user equipment (UE) specific search space set or a Type 3-Physical Downlink Control Channel (PDCCH) Common Search Space (CSS) set.

The PDSCH may be scheduled by downlink control information in a CSS set other than a Type 3-PDCCH CSS set.

In a case in which the scheduling does not follow the specific TCI state and the time offset between the downlink control information scheduling the PDSCH and the PDSCH is less than a threshold value, the specific TCI state may be used as the QCL assumption.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

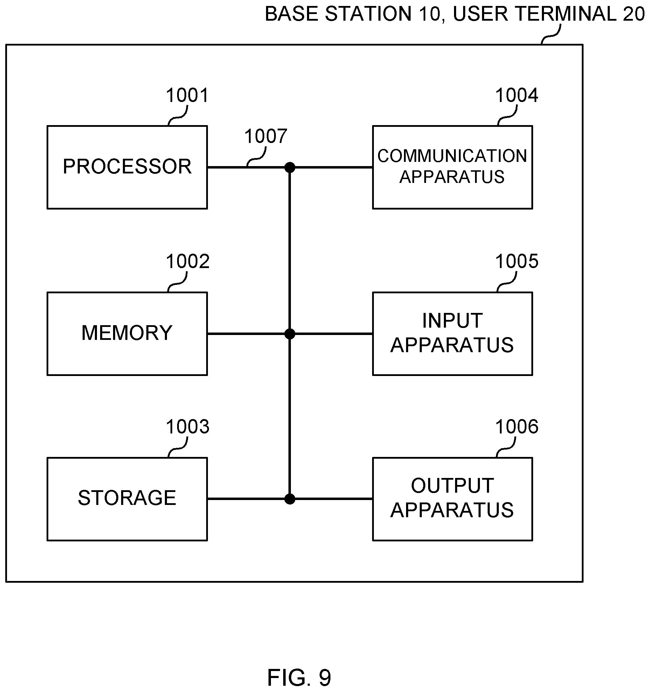

For example, a base station, a user terminal, and so on according to one embodiment of the present disclosure may function as a computer that executes the processes of the radio communication method of the present disclosure. FIG. 9 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input/output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the base station transmitting information to the terminal may be interchangeably interpreted as the base station indicating control/operation based on the information to the terminal.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

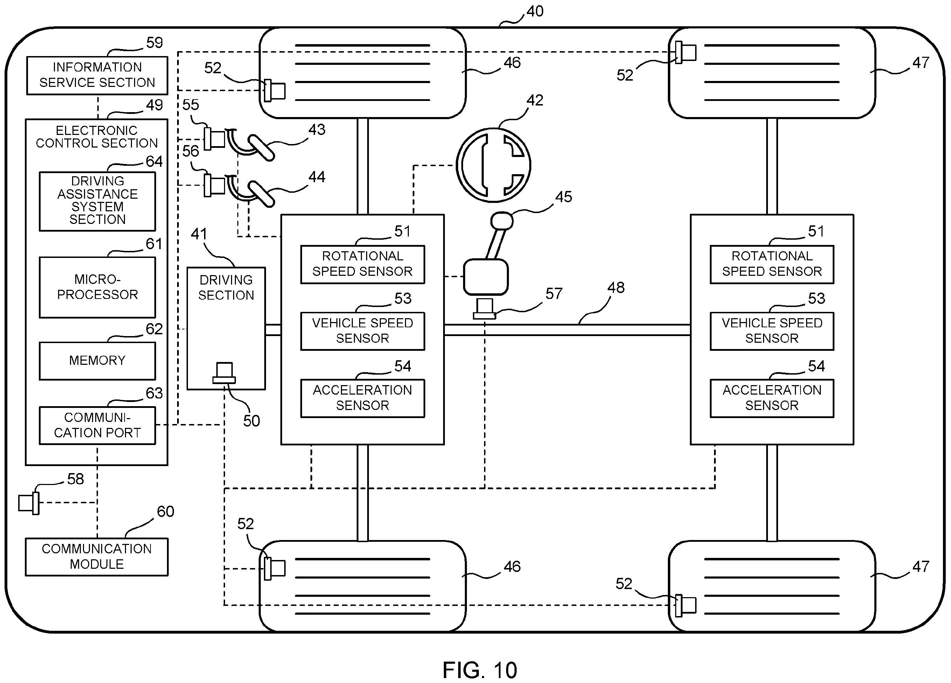

FIG. 10 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or smaller than," "smaller than," "equal to or larger than," "larger than," "equal to," and the like may be interchangeably interpreted. In the present disclosure, words such as "good," "poor," "large," "small," "high," "low, " "early, " "late," "wide," "narrow," and the like may be interchangeably interpreted irrespective of positive degree, comparative degree, and superlative degree. In the present disclosure, expressions obtained by adding "i-th" (i is any integer) to words such as "good," "poor," "large," "small," "high," "low," "early," "late," "wide," "narrow," and the like may be interchangeably interpreted irrespective of positive degree, comparative degree, and superlative degree (for example, "highest" may be interpreted as "i-th highest," and vice versa).

In the present disclosure, "of," "for," "regarding," "related to," "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a configuration indicating whether scheduling of a physical downlink shared channel (PDSCH) follows a specific transmission configuration indication (TCI) state that is applied to a plurality of types of signals, including downlink and uplink, and downlink; and
a control section that determines a quasi co-location (QCL) assumption for a demodulation reference signal (DMRS) port of the PDSCH based on the configuration.

2. The terminal according to claim 1, wherein
the PDSCH is scheduled by downlink control information within a user equipment (UE) specific search space set or a Type 3-Physical Downlink Control Channel (PDCCH) Common Search Space (CSS) set.

3. The terminal according to claim 1, wherein
the PDSCH is scheduled by downlink control information in a CSS set other than a Type 3-PDCCH CSS set.

4. The terminal according to claim 1, wherein
in a case in which the scheduling does not follow the specific TCI state and the time offset between the downlink control information scheduling the PDSCH and the PDSCH is less than a threshold value, the specific TCI state is used as the QCL assumption.

5. A radio communication method for a terminal, the radio communication method comprising:
receiving a configuration indicating whether scheduling of a physical downlink shared channel (PDSCH) follows a specific transmission configuration indication (TCI) state that is applied to a plurality of types of signals, including downlink and uplink, and downlink; and
determining a quasi co-location (QCL) assumption for a demodulation reference signal (DMRS) port of the PDSCH based on the configuration.

6. A base station comprising:
a transmitting section that transmits a configuration indicating whether scheduling of a physical downlink shared channel (PDSCH) follows a specific transmission configuration indication (TCI) state that is applied to any one of a plurality of types of signals, including downlink and uplink, and downlink; and
a control section that determines a quasi co-location (QCL) assumption for a demodulation reference signal (DMRS) port of the PDSCH based on the configuration.
